# EUROPEAN PATENT APPLICATION

(11) **EP 4 401 218 A1**
(43) Date of publication of application: **17.07.2024**
(21) Application number: 23858419.7
(22) Date of filing: 07.07.2023
(51) Int. Cl.: H01M 50/24, H01M 50/211, H01M 50/502, H01M 50/249

(54) **BATTERY MODULE**

(30) Priority: 02.12.2022 KR 20220166949; 30.03.2023 KR 20230042346
(71) Applicant: LG ENERGY SOLUTION, LTD., Seoul 07335 (KR)
(72) Inventor: PARK, Jeong-Hoon, Daejeon 34122 (KR); KIM, Soo-Youl, Daejeon 34122 (KR); JUNG, Hye-Mi, Daejeon 34122 (KR)
(74) Representative: Plasseraud IP
(86) International application number: PCT/KR2023/009690
(87) International publication number: WO 2024/117428

(57) **Abstract**

Disclosed is a battery module. A battery module according to an embodiment of the present disclosure may include a frame providing an interior space; a battery cell accommodated inside the frame and having a body and an electrode lead protruding toward the front of the body; a bus bar frame assembly located in front of the battery cell and electrically connected to the electrode lead; and a fire-resistant coating layer provided on at least a portion of the battery cell and having fire resistance.

## Description

### TECHNICAL FIELD

The present disclosure relates to a battery module.

The present application claims priority to Korean Patent Application No. 10-2022-0166949 filed on December 2, 2022 and Korean Patent Application No. 10-2023-0042346 filed on March 30, 2023, the disclosures of which are incorporated herein by reference.

### BACKGROUND ART

As the demand for portable electronic products such as laptops, video cameras, and mobile phones has rapidly increased in recent years and the commercialization of robots, electric vehicles, and the like has begun in earnest, research on high-performance secondary batteries capable of repeated charge/discharge has been actively conducted.

Currently commercialized secondary batteries include nickel cadmium batteries, nickel hydride batteries, nickel zinc batteries, lithium secondary batteries, and the like. In particular, lithium secondary batteries are in the spotlight because they have almost no memory effect compared to nickel-based secondary batteries and thus have advantages of free charge/discharge, very low self-discharge rate, and high energy density.

Such lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively, are disposed with a separator therebetween, and an exterior material that seals and accommodates the electrode assembly together with an electrolyte, that is, a battery case.

In general, lithium secondary batteries may be classified into can-type secondary batteries in which electrode assemblies are embedded in a metal can and pouch-type secondary batteries in which electrode assemblies are embedded in a pouch of aluminum laminate sheets, depending on the shape of an exterior material.

Recently, secondary batteries have been widely used for driving or energy storage not only in small devices such as portable electronic devices, but also in medium/large devices such as electric vehicles and energy storage systems (ESSs). These secondary batteries are accommodated together inside a module case in a state where a plurality of secondary batteries are electrically connected, which may form one battery module. In addition, such a battery module may be connected in plurality to form one battery pack.

However, when a plurality of secondary batteries (battery cells) or a plurality of battery modules are concentrated in a narrow space as described above, they may be vulnerable to thermal events. In particular, when an event such as thermal runaway occurs in any one of the battery cells, high temperature gas, flame, heat, or the like may be generated. If such gas, flame, heat, or the like is transferred to other battery cells included in the same battery module, an explosive chain reaction situation such as thermal propagation may occur. In addition, this chain reaction may cause not only an accident such as fire or explosion in the corresponding battery module, but also fire or explosion in other battery modules.

Moreover, in the case of medium/large-sized devices such as electric vehicles, a large number of battery cells and battery modules may be included to increase output and/or capacity, thereby further increasing the risk of thermal chain reaction. In addition, in the case of a battery pack mounted on an electric vehicle, there may be a user such as a driver in the vicinity thereof. Therefore, if a thermal event occurring in a specific battery module is not properly controlled and a chain reaction occurs, it may cause not only significant property damage but also loss of life.

### DISCLOSURE

### Technical Problem

The present disclosure is designed to solve the above-described problems and other problems.

Another object of the present disclosure may be to provide a battery module capable of suppressing heat propagation.

Still another object of the present disclosure may be to provide a battery module capable of maintaining safety even when exposed to flame or venting gas.

### Technical Solution

A battery module according to an embodiment of the present disclosure may include a frame providing an interior space; a battery cell accommodated inside the frame and having a body and an electrode lead protruding toward the front of the body; a bus bar frame assembly located in front of the battery cell and electrically connected to the electrode lead; and a fire-resistant coating layer provided on at least a portion of the battery cell and having fire resistance.

In addition, the battery cell may further include a front terrace portion extending forward from the body and surrounding the electrode lead, wherein the coating layer may include a first coating layer covering the front terrace portion and the electrode lead.

In addition, the fire-resistant coating layer may include a second coating layer covering at least a portion of the rear surface of the bus bar frame assembly.

In addition, the bus bar frame assembly may have a slit, wherein the electrode lead may pass through the slit, and the second coating layer may extend to cover between the slit and the electrode lead.

In addition, the coating layer may further include a third coating layer extending from the second coating layer and covering the front surface of the bus bar frame assembly.

In addition, the frame may be open forward, and the battery module may further include an end plate located in front of the bus bar frame assembly and coupled to the front side of the frame.

In addition, the battery cell may further include an upper sealing portion extending upward from the body, wherein the coating layer may include a fourth coating layer covering at least a portion of the upper sealing portion.

In addition, the battery cell may further include an adhesive member for folding and fixing the upper sealing portion, wherein the fourth coating layer may extend to cover the adhesive member.

In addition, the battery module may further include a barrier that covers the side surface of the battery cell and is in close contact with the rear surface of the bus bar frame assembly, wherein the coating layer may further include a fifth coating layer covering the rear surface of the bus bar frame assembly and the side surface of the barrier adjacent to the rear surface.

In addition, the bus bar frame assembly may have a hole formed long in the vertical direction, wherein the battery module may further include a barrier that covers the side surface of the battery cell and penetrates the hole of the bus bar frame assembly, and the coating layer may further include a sixth coating layer covering the rear surface of the bus bar frame assembly and the side surface of the barrier adjacent to the rear surface.

A battery pack according to an embodiment of the present disclosure includes a battery module of the present disclosure.

A vehicle according to an embodiment of the present disclosure includes a battery module of the present disclosure.

### Advantageous Effects

According to at least one of the embodiments of the present disclosure, a battery module capable of suppressing heat propagation may be provided.

According to at least one of the embodiments of the present disclosure, a battery module including a fire-resistant coating layer capable of protecting a bus bar frame assembly from flame or venting gas may be provided.

According to at least one of the embodiments of the present disclosure, a battery module including a fire-resistant coating layer capable of maintaining the function of a barrier that may suppress heat propagation may be provided.

According to at least one of the embodiments of the present disclosure, a battery module including a fire-resistant coating layer that seals a gap in a slit through which an electrode lead of a battery cell passes may be provided.

According to at least one of the embodiments of the present disclosure, a battery module including a battery cell that may maintain safety even when exposed to flame or venting gas may be provided.

According to at least one of the embodiments of the present disclosure, a battery module including a fire-resistant coating layer for venting control may be provided.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a perspective view showing a battery module according to an embodiment of the present disclosure.
FIG. 2 is an exploded view showing a partial configuration of a battery module according to an embodiment of the present disclosure.
FIG. 3 is a view showing a partial configuration of a battery module according to an embodiment of the present disclosure.
FIG. 4 is a view showing a bus bar frame assembly of a battery module according to an embodiment of the present disclosure.
FIG. 5 is a view showing a battery cell of a battery module according to an embodiment of the present disclosure.
FIG. 6 is a view showing a portion of the cross-sectional configuration taken along the cutting line A-A' in FIG. 1.
FIG. 7 is a view showing a modified example of the cross-sectional configuration taken along the cutting line A-A' in FIG. 1.
FIG. 8 is a view showing a modified example of the cross-sectional configuration taken along the cutting line A-A' in FIG. 1.
FIG. 9 is a view showing a modified example of the cross-sectional configuration taken along the cutting line A-A' in FIG. 1.
FIG. 10 is a view showing a modified example of the cross-sectional configuration taken along the cutting line A-A' in FIG. 1.
FIG. 11 is a view showing a battery cell of a battery module according to an embodiment of the present disclosure.
FIG. 12 is a view showing a modified example of a battery cell of a battery module according to an embodiment of the present disclosure.
FIG. 13 is a view showing venting of a battery cell of a battery module according to an embodiment of the present disclosure.
FIG. 14 is a view showing a portion of the cross-sectional configuration taken along the cutting line A-A' in FIG. 1.
FIG. 15 is a view showing a modified example of the cross-sectional configuration taken along the cutting line A-A' in FIG. 1.
FIG. 16 is a view showing a bus bar frame assembly of a battery module according to an embodiment of the present disclosure.
FIG. 17 is a view showing a modified example of the cross-sectional configuration taken along the cutting line A-A' in FIG. 1.
FIG. 18 is a view showing a barrier and a battery cell of a battery module according to another embodiment of the present disclosure.
FIG. 19 is a view showing coupling of a barrier and a battery cell of a battery module according to another embodiment of the present disclosure.
FIG. 20 is a front view showing coupling of a barrier and a battery cell of a battery module according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

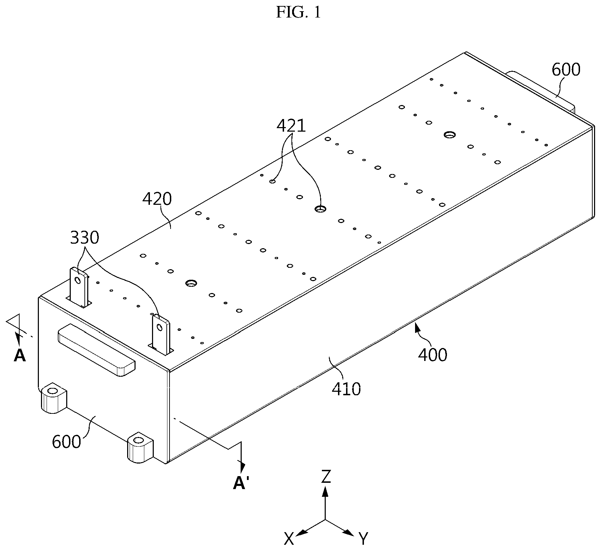

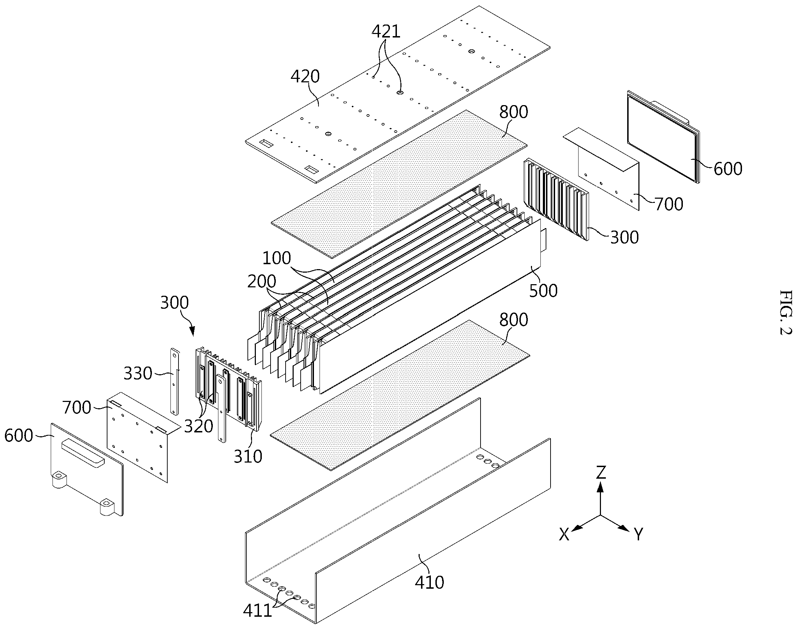

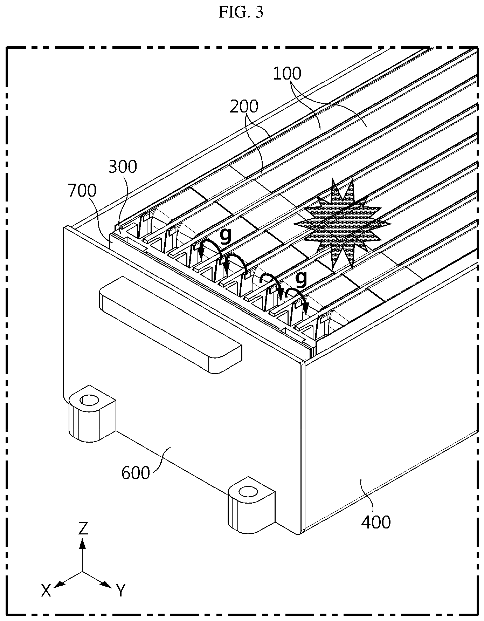

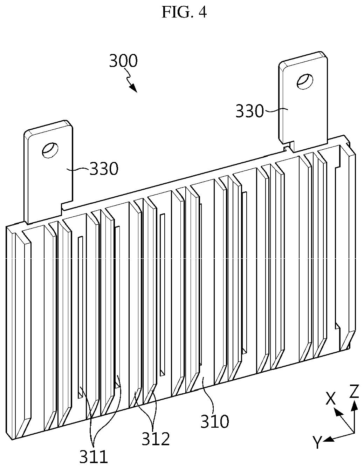

FIG. 1 is a perspective view showing a battery module according to an embodiment of the present disclosure. FIG. 2 is an exploded view showing a partial configuration of a battery module according to an embodiment of the present disclosure. FIG. 3 is a view showing a partial configuration of a battery module according to an embodiment of the present disclosure. FIG. 4 is a view showing a bus bar frame assembly 300 of a battery module according to an embodiment of the present disclosure. Referring to FIGS. 1 to 4, a battery module according to an embodiment of the present disclosure may be configured to include a frame 400, a battery cell 100, a bus bar frame assembly 300, and a fire-resistant coating layer 900.

The frame 400 may include an upper frame 420 and a lower frame 410. The lower frame may include a bottom plate and a pair of side plates extending from the bottom plate. The lower frame may form an interior space. The upper frame 420 and the lower frame 410 may be coupled by welding. The upper frame 420 may be coupled to a pair of side plates of the lower frame 410. Alternatively, the frame 400 may be formed integrally. The frame 400 may be configured in a rectangular parallelepiped shape. Also, the frame 400 may provide a space therein. The frame 400 may form the exterior of the battery module. And, the frame 400 may extend long in the front-rear direction or the X-axis direction. In addition, the frame 400 may be configured to be open in the front-rear direction or the X-axis direction.

A plurality of battery cells 100 may be configured to be accommodated in the interior space provided by the frame 400. Here, each battery cell 100 may mean a secondary battery. Each battery cell 100 may include a body 110 and an electrode lead 120 that protrudes in the front-rear direction of the body 110 or in the X-axis direction and -X-axis direction. The battery cell 100 may include an electrode assembly, an electrolyte, and a battery case. And at this time, the electrode assembly, the electrolyte, and the battery case may constitute the body 110. The battery cell 100 may be a pouch-type secondary battery. The plurality of battery cells 100 may generate heat while charging or discharging. The plurality of battery cells 100 may function as a heat source. The plurality of battery cells 100 may form a battery module. The battery module may be configured to store and release energy by including one or more battery cells 100. The plurality of battery cells 100 may be disposed or stacked in the left-right direction or the Y-axis direction.

The bus bar frame assembly 300 may be located in front of the plurality of battery cells 100. Also, each electrode lead 120 of the plurality of battery cells 100 may be electrically connected to the bus bar frame assembly 300. The busbar frame assembly 300 may be configured to include a frame body 310, a bus bar 320, and a module terminal 330. The frame body 310 may be configured to cover the front side of the plurality of battery cells 100. The bus bar 320 may be provided, coupled, or fastened to the front surface of the frame body 310. In addition, the bus bar 320 may be configured in plurality. And, the module terminal 330 may be electrically connected to the bus bar 320. The module terminal 330 may function as an input/output terminal of the battery module. Also, the frame body 310 may include a slit 311 formed long in the vertical direction or the Z-axis direction. The slit 311 may be configured to penetrate the frame body 310 in the front-rear direction or the X-axis direction. The slit 311 may be formed in plurality and may be located along the left-right direction or the Y-axis direction. Each electrode lead 120 of the plurality of battery cells 100 may pass through the slit 311. The electrode lead 120 may pass through the slit 311 and then be electrically connected to the bus bar 320 provided on the front surface of the frame body 310. The bus bar frame assembly 300 may be formed in a pair. The bus bar frame assembly 300 may be provided on a front side and a rear side of the plurality of battery cells 100, respectively.

The fire-resistant coating layer 900 may be provided on each of the plurality of battery cells 100. The fire-resistant coating layer 900 may be provided on at least a portion of each battery cell 100 and may have fire resistance. For example, the fire-resistant coating layer 900 may be made of a material such as epoxy, non-flammable PCM, FPC 5060, Locitite EA9400, or ceramic. In addition, the fire-resistant coating layer 900 may be formed by spraying onto the battery cell 100 in liquid form. At this time, the fire-resistant coating layer 900 may be configured to form a thickness of about 0.05 to 2.2 mm.

According to this configuration of the present disclosure, the battery cell 100 may be safely protected even if exposed to flame or venting gas (g). Referring to FIG. 3, when a thermal event occurs in the battery cell 100, flame or venting gas (g) may be transferred to the adjacent battery cell 100. At this time, the fire-resistant coating layer 900 may protect the battery cell 100 from the flame or venting gas (g). Therefore, even if a thermal event occurs in the battery cell 100, heat propagation to other battery cells 100 may be effectively suppressed, delayed, or prevented. As a result, the thermal safety of the battery module may be improved.

Referring to FIGS. 1 to 4, a battery module according to an embodiment of the present disclosure may be configured to include a barrier 200, an end plate 600, an insulating sheet 700, or a resin 800.

The barrier 200 may be configured in a rectangular shape. The barrier 200 may extend in the front-rear direction or the X-axis direction. Also, the barrier 200 may be provided in plurality. Each barrier 200 may be disposed between a plurality of battery cells 100. The barrier 200 may be disposed or stacked in the left-right direction or the Y-axis direction. A front side and a rear side of the barrier 200 may be contacted, coupled, fastened, inserted, or attached to the bus bar frame assembly 300, respectively. And, the barrier 200 may be composed of one part or a plurality of parts. When the barrier 200 is composed of a plurality of parts, it may be referred to as a barrier assembly 200. The barrier 200 may suppress, delay, or prevent flame or venting gas (g) from propagating in the left-right direction or the Y-axis direction. The barrier 200 may be made of a material that is not easily damaged even when exposed to flame or venting gas (g).

The end plate 600 may be formed in a pair. The end plate 600 may be provided on a front side and a rear side of the plurality of battery cells 100, respectively. The end plate 600 may be fastened, coupled, or welded to a front side or a rear side of the frame 400, respectively. Alternatively, the end plate 600 may be fastened, coupled, or welded to an open end of the frame 400, respectively. The frame 400 may be internally sealed by being fastened, coupled, or welded to the end plate 600.

The insulating sheet 700 may be configured to be positioned between the end plate 600 and the bus bar frame assembly 300. The insulating sheet 700 may electrically separate the end plate 600 from the bus bar frame assembly 300. The insulating sheet 700 may be configured in a pair. The insulating sheet 700 may be provided between the front side end plate 600 and the front side bus bar frame assembly 300 and between the rear side end plate 600 and the rear side bus bar frame assembly 300, respectively.

The resin 800 may be configured to be formed inside the frame 400. The resin 800 may be configured to be positioned between the plurality of battery cells 100 and the lower frame 410. In addition, the resin 800 may be configured to be positioned between the plurality of battery cells 100 and the upper frame 420. In addition, the resin 800 may be configured to be positioned between the plurality of barriers 200 and the lower frame 410. In addition, the resin 800 may be configured to be positioned between the plurality of barriers 200 and the upper frame 420. The resin 800 may fix the positions of the plurality of battery cells 100 or the plurality of barriers 200. In addition, the resin 800 may cool the plurality of battery cells 100 by transferring heat generated from the plurality of battery cells 100 to the frame 400. The resin 800 may be injected into the interior of the frame 400 through holes 411, 421 of the upper frame 420 and the lower frame 410. In addition, flame or venting gas (g) generated inside the battery module may be discharged to the outside through the holes 411, 421.

A buffer pad 500 may be disposed between the outermost barrier 200 and the lower frame 410. Alternatively, the buffer pad 500 may be disposed between the outermost battery cell 100 and the lower frame 410. The buffer pad 500 may be configured in a pair. When swelling occurs from the plurality of battery cells 100, the buffer pad 500 may stably support the plurality of battery cells 100 by being elastically deformed. For example, the buffer pad 500 may be made of silicone material.

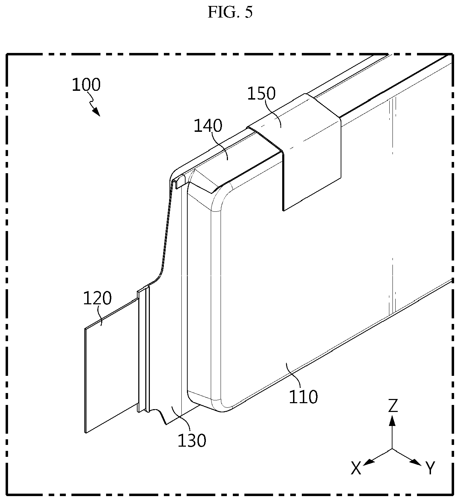

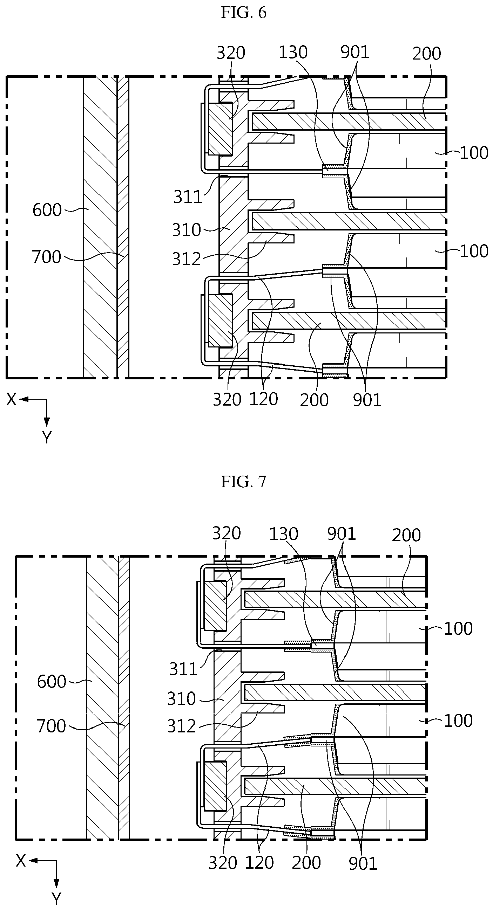

FIG. 5 is a view showing a battery cell 100 of a battery module according to an embodiment of the present disclosure. FIG. 6 is a view showing a portion of the cross-sectional configuration taken along the cutting line A-A' in FIG. 1. FIG. 7 is a view showing a modified example of the cross-sectional configuration taken along the cutting line A-A' in FIG. 1. Referring to FIGS. 5 to 7, the battery cell 100 of the battery module according to an embodiment of the present disclosure may further include a front terrace portion 130 extending forward from the body 110 and surrounding the electrode lead 120, wherein the coating layer 900 may be configured to include a first coating layer 901 covering the front terrace portion 130 and the electrode lead 120.

Each battery cell 100 may include a sealing portion 140 extending from the body 110. The sealing portion may be formed along the circumference of the body 110. In particular, the sealing portion protruding forward from the body 110 may be referred to as the front terrace portion 130. Also, the sealing portion protruding upward from the body 110 may be referred to as an upper sealing portion 140. In addition, the sealing portion protruding rearward from the body 110 may be referred to as a rear terrace portion 130. The upper sealing portion 140 may be configured to be folded and fixed to the body by an adhesive member 150. The front terrace portion 130 and the rear terrace portion 130 may each be configured to surround the electrode lead 120.

The first coating layer 901 may be configured to surround the circumference of the terrace portion 130. Alternatively, the first coating layer 901 may be configured to cover both sides of the terrace portion 130. In addition, the first coating layer 901 may be configured to extend to surround the portion of the electrode lead 120 adjacent to the terrace portion 130.

According to this configuration of the present disclosure, the terrace portion 130, which can be easily damaged from flame or venting gas (g), may be protected. As a result, the propagation of thermal events may be effectively suppressed, delayed, or prevented.

In addition, according to this configuration of the present disclosure, the first coating layer 901 may extend to the portion of the electrode lead 120 adjacent to the terrace portion 130, thereby preventing flame or venting gas (g) from penetrating between the terrace portion 130 and the electrode lead 120. As a result, the thermal safety of the battery module may be further improved.

In addition, according to this configuration of the present disclosure, flame or venting gas (g) generated inside the battery cell 100 may be suppressed from being discharged to the front and rear sides.

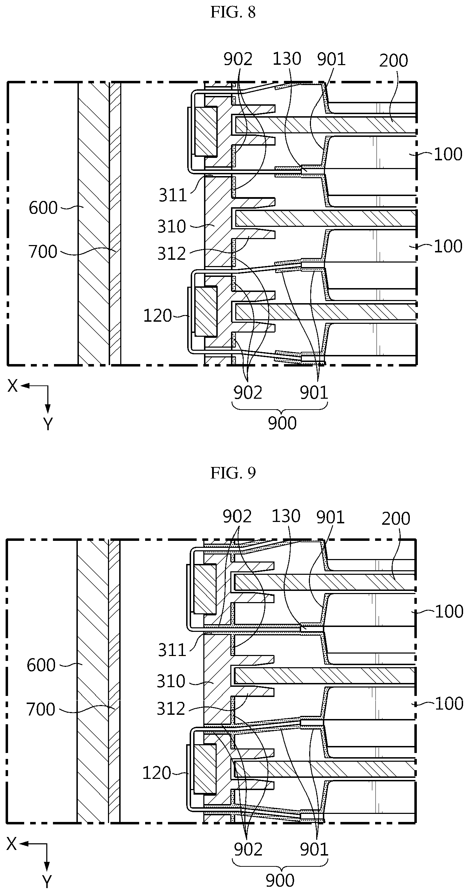

FIG. 8 is a view showing a modified example of the cross-sectional configuration taken along the cutting line A-A' in FIG. 1. Referring to FIG. 8, the fire-resistant coating layer 900 of the battery module according to an embodiment of the present disclosure may be configured to include a second coating layer 902 covering at least a portion of the rear surface of the bus bar frame assembly 300. The first coating layer 901 and the second coating layer 902 may be configured separately or continuously.

According to this configuration of the present disclosure, the bus bar frame assembly 300 may be protected from flame or venting gas (g). For example, the frame body 310 may be made of a plastic material. For this reason, when the frame body 310 is exposed to flame or venting gas (g), the frame body 310 may be damaged. Since the second coating layer 902 covers the rear surface of the frame body 310, the fire resistance of the frame body 310 may be improved.

FIG. 9 is a view showing a modified example of the cross-sectional configuration taken along the cutting line A-A' in FIG. 1. Referring to FIG. 9, the bus bar frame assembly 300 of the battery module according to an embodiment of the present disclosure may include a slit 311, wherein the electrode lead 120 may pass through the slit 311, wherein the second coating layer 902 may be configured to extend to cover between the slit 311 and the electrode lead 120.

The slit 311 may be formed in the vertical direction or the Z-axis direction. The slit 311 may penetrate the frame body 310. The second coating layer 902 may cover between the slit 311 and the electrode lead 120, and may be configured to extend along the circumference of the electrode lead 120.

According to this configuration of the present disclosure, it is possible to prevent flame or venting gas (g) from being ejected through the slit 311 when a thermal event occurs. As a result, heat propagation may be effectively suppressed, blocked, delayed, or reduced.

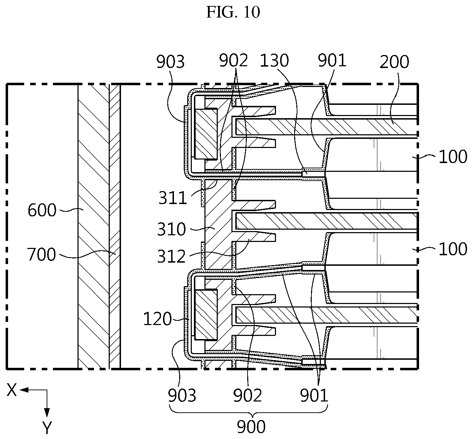

FIG. 10 is a view showing a modified example of the cross-sectional configuration taken along the cutting line A-A' in FIG. 1. Referring to FIG. 10, the coating layer 900 of the battery module according to an embodiment of the present disclosure may be configured to further include a third coating layer 903 extending from the second coating layer 902 and covering the front surface of the bus bar frame assembly 300.

The third coating layer 903 may be configured to cover the front surface of the frame body 310. In addition, the third coating layer 903 may be configured to cover the portion of the electrode lead 120 passing through the slit 311. Also, the third coating layer 903 may be configured to cover the bus bar 320 electrically connected to the electrode lead 120.

According to this configuration of the present disclosure, it is possible to more reliably prevent flame or venting gas (g) from being ejected through the slit 311 when a thermal event occurs. As a result, heat propagation may be effectively suppressed, blocked, delayed, or reduced.

Referring to FIGS. 6 to 10, the frame 400 of the battery module according to an embodiment of the present disclosure may be configured to be open forward. Also, the battery module according to an embodiment of the present disclosure may include an end plate 600 located in front of the bus bar frame assembly 300 and coupled to the front side or an open end of the frame 400. The end plate 600 and the insulating sheet 700 may be positioned to cover the frame body 310 or the slit 311.

According to this configuration of the present disclosure, when a thermal event occurs, it is possible to prevent flame or venting gas (g) from being ejected through the slit 311, and the insulating sheet 700 or the end plate 600 may suppress, block, delay, or reduce damage caused by flame or venting gas (g).

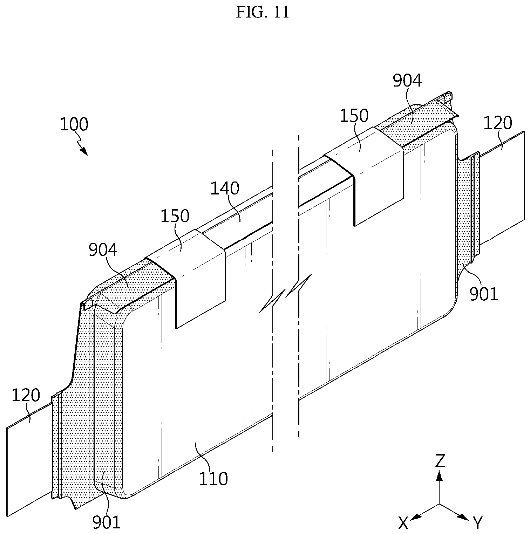

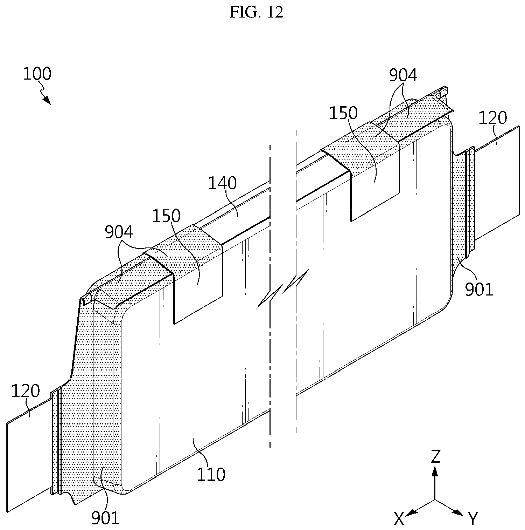

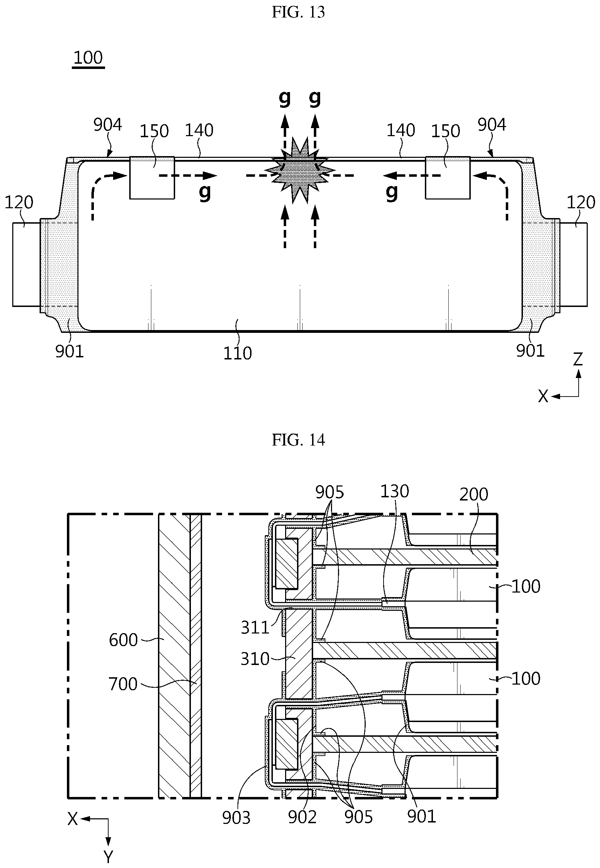

FIG. 11 is a view showing a battery cell 100 of a battery module according to an embodiment of the present disclosure. FIG. 12 is a view showing a modified example of a battery cell 100 of a battery module according to an embodiment of the present disclosure. FIG. 13 is a view showing venting of a battery cell 100 of a battery module according to an embodiment of the present disclosure. Referring to FIGS. 11 to 13, the battery cell 100 of the battery module according to an embodiment of the present disclosure may be configured to include an upper sealing portion 140 extending upward from the body 110. Also, the coating layer 900 may be configured to include a fourth coating layer 904 covering at least a portion of the upper sealing portion 140.

The fourth coating layer 904 may be configured to be separated from or continuous with the first coating layer 901. For example, the fourth coating layer 904 may be configured to extend from the first coating layer 901 to be formed on the front side of the upper sealing portion 140.

According to this configuration of the present disclosure, when flame or venting gas (g) is generated in the battery cell 100, it may be suppressed from being ejected toward the first coating layer 901 and the fourth coating layer 904. Accordingly, flame or venting gas (g) may be induced to be ejected upward from near the center of the battery cell 100. As a result, venting control may be facilitated and thermal stability of the battery module may be improved.

Referring to FIGS. 11 to 13, the battery cell 100 of the battery module according to an embodiment of the present disclosure may further include an adhesive member 150 for folding and fixing the upper sealing portion 140, and the fourth coating layer 904 may be configured to extend to cover at least a portion of the adhesive member 150.

The upper sealing portion 140 may be configured to be folded and fixed to the body 110 by the adhesive member 150. For example, the battery cell 100 may be configured to include two adhesive members 150. One adhesive member 150 may be disposed adjacent to the front edge of the body 110, and the other adhesive member 150 may be disposed adjacent to the rear edge. For example, the fourth coating layer 904 may be configured to extend from the first coating layer 901 to a portion that may cover the adhesive member 150. The adhesive member 150 may not be disposed in the central portion of the body 110.

According to this configuration of the present disclosure, the fourth coating layer 904 extends further to the central portion of the body 110, so that flame or venting gas (g) may be more strongly induced to be ejected upward from near the center of the battery cell 100. As a result, venting control may be facilitated and thermal stability of the battery module may be improved.

FIG. 14 is a view showing a portion of the cross-sectional configuration taken along the cutting line A-A' in FIG. 1. Referring to FIG. 14, the battery module according to an embodiment of the present disclosure may be configured to further include a barrier 200 that cover the side surface of the battery cell 100 and is in close contact with the rear surface of the bus bar frame assembly 300. Also, the coating layer 900 may be configured to further include a fifth coating layer 905 covering the rear surface of the bus bar frame assembly 300 and the side surface of the barrier 200 adjacent to the rear surface of the bus bar frame assembly 300. The fifth coating layer 905 may cover the exposed front edge of the barrier 200. The fifth coating layer 905 may be separated from or continuous with the second coating layer 902. The fifth coating layer 905 may be configured to extend in the vertical direction or the Z-axis direction.

According to this configuration of the present disclosure, the gap between the barrier 200 and the frame body 310 may be sealed. Accordingly, the propagation of flame or venting gas (g) may be suppressed, blocked, delayed, or reduced.

In addition, according to this configuration of the present disclosure, the front edge of the barrier 200 may not be exposed to flame or venting gas (g). As a result, the heat resistance or fire resistance of the barrier 200 may be stably maintained.

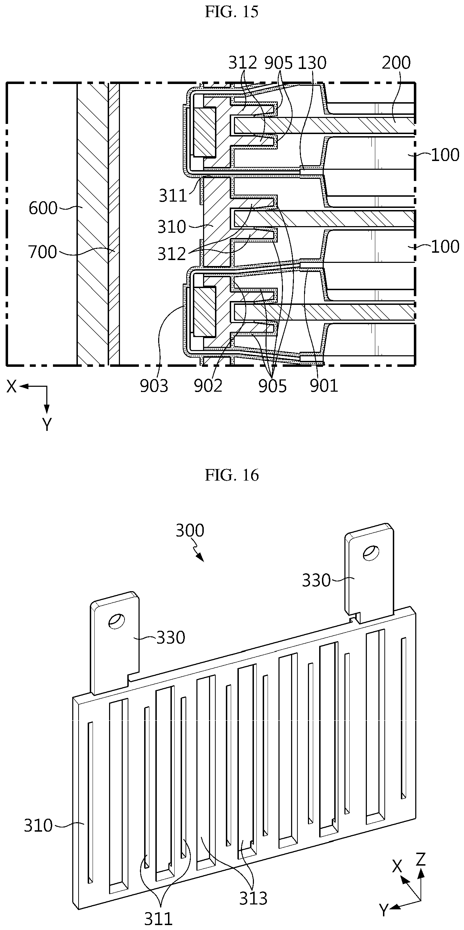

FIG. 15 is a view showing a modified example of the cross-sectional configuration taken along the cutting line A-A' in FIG. 1. Referring to FIG. 15, the frame body 310 of the battery module according to an embodiment of the present disclosure may include a slot 312 protruding rearward. The slot 312 may extend long along the vertical direction or the Z-axis direction. The barrier 200 may be fitted or inserted into the slot 312. In addition, the fifth coating layer 905 may coat the space between the slot 312 and the side surface of the barrier 200. The fifth coating layer 905 may be configured to extend along the slot 312 in the vertical direction or the Z-axis direction.

According to this configuration of the present disclosure, the gap between the slot 312 and the barrier 200 may be sealed. Accordingly, the propagation of flame or venting gas (g) may be suppressed, blocked, delayed, or reduced.

In addition, according to this configuration of the present disclosure, the front edge of the barrier 200 may not be exposed to flame or venting gas (g). As a result, the heat resistance or fire resistance of the barrier 200 may be stably maintained.

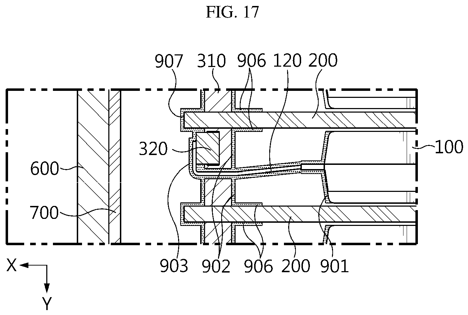

FIG. 16 is a view showing a bus bar frame assembly 300 of a battery module according to an embodiment of the present disclosure. FIG. 17 is a view showing a modified example of the cross-sectional configuration taken along the cutting line A-A' in FIG. 1. Referring to FIGS. 16 and 17, the bus bar frame assembly 300 of the battery module according to an embodiment of the present disclosure may be configured to have a hole 313 formed long in the vertical direction. Also, the battery module according to an embodiment of the present disclosure may be configured to further include the barrier 200 covering the side surface of the battery cell 100 and penetrating the hole 313 of the bus bar frame assembly 300. In addition, the coating layer 900 may be configured to further include a sixth coating layer 906 covering the rear surface of the bus bar frame assembly 300 and the side surface of the barrier 200 adjacent to the rear surface of the bus bar frame assembly 300.

The hole 313 may be configured to penetrate the frame body 313. The hole 313 may extend in the vertical direction or the Z-axis direction. The hole 313 may be formed larger than the slit 312. In addition, the hole 313 may be formed longer than the slit 312. The hole 313 may be formed in plurality, and the plurality of holes 313 and the plurality of slits 312 may be arranged alternately.

The barrier 200 may be inserted into the hole 313 or positioned to pass through the hole 313. The sixth coating layer 906 may be separated from or continuous with the second coating layer 902. The sixth coating layer 906 may be configured to extend in the vertical direction or the Z-axis direction. In addition, the sixth coating layer 906 may be configured to extend along the circumference of the hole 313 or the barrier 200.

According to this configuration of the present disclosure, the gap between the barrier 200 and the hole 313 may be sealed. Accordingly, the propagation of flame or venting gas (g) may be suppressed, blocked, delayed, or reduced.

In addition, according to this configuration of the present disclosure, the front edge of the barrier 200 may not be exposed to flame or venting gas (g). As a result, the heat resistance or fire resistance of the barrier 200 may be stably maintained.

Also, according to this configuration of the present disclosure, it is possible to prevent flame or venting gas (g) from being ejected through the hole 313 when a thermal event occurs. As a result, heat propagation may be effectively suppressed, blocked, delayed, or reduced.

Referring to FIGS. 16 and 17, the sixth coating layer 906 of the battery module according to an embodiment of the present disclosure may be configured to extend to cover between the hole 313 and the barrier 200. The sixth coating layer 906 may cover between the hole 313 and the barrier 200 and may be configured to extend along the circumference of the hole 313 or the barrier 200.

In addition, the coating layer 900 of the battery module according to an embodiment of the present disclosure may be configured to further include a seventh coating layer 907 extending from the sixth coating layer 906 and covering the front surface of the bus bar frame assembly 300. The seventh coating layer 907 may be separated from or continuous with the third coating layer 903. The seventh coating layer 907 may be configured to extend in the vertical direction or the Z-axis direction. In addition, the seventh coating layer 907 may be configured to extend along the circumference of the hole 313.

The seventh coating layer 907 may be configured to cover the front surface of the frame body 310. In addition, the seventh coating layer 907 may be configured to cover the portion of the barrier 200 passing through the hole 313. Also, the seventh coating layer 907 may be configured to cover the bus bar 320 electrically connected to the electrode lead 120.

According to this configuration of the present disclosure, it is possible to more reliably prevent flame or venting gas (g) from being ejected through the hole 313 when a thermal event occurs. As a result, heat propagation may be effectively suppressed, blocked, delayed, or reduced.

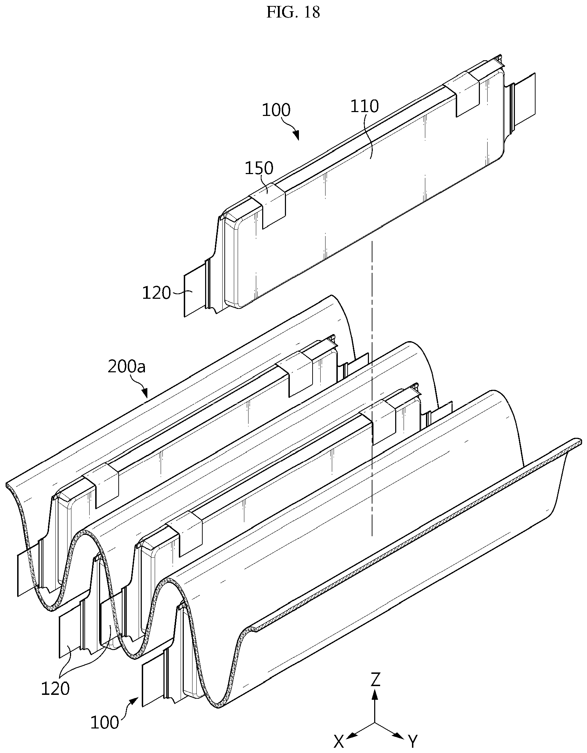

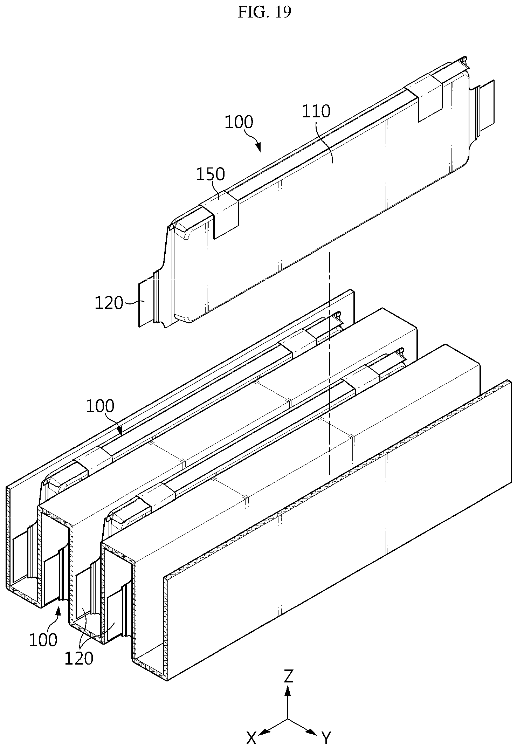

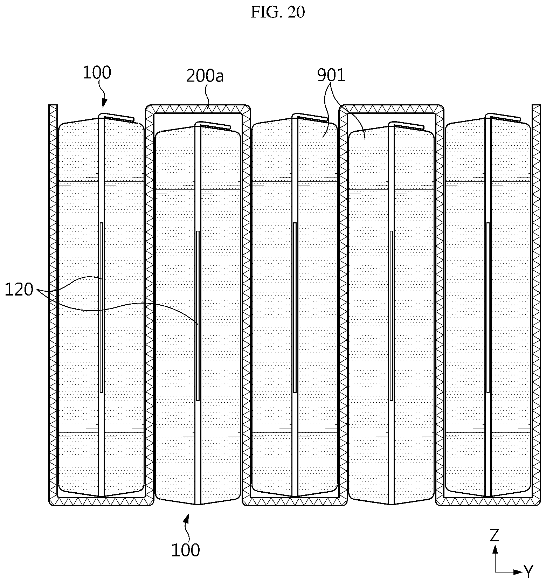

FIG. 18 is a view showing a barrier 200a and a battery cell 100 of a battery module according to another embodiment of the present disclosure. FIG. 19 is a view showing coupling of a barrier 200a and a battery cell 100 of a battery module according to another embodiment of the present disclosure. FIG. 20 is a front view showing coupling of a barrier 200a and a battery cell 100 of a battery module according to another embodiment of the present disclosure. Referring to FIGS. 18 to 20, a battery module according to another embodiment of the present disclosure may include a barrier 200a made of a single material.

The barrier 200a may be configured to have a corrugated cardboard shape, corrugated cardboard structure, or corrugated structure. The barrier 200a may be formed of a paper having fire resistance. The barrier 200a may be configured to include a pair of paper sheets and a corrugated paper sheet adhered between the pair of paper sheets. The barrier 200a may be formed in a corrugated structure with peaks and valleys. The plurality of battery cells 100 may be disposed to be positioned in the peak and the valley, respectively. The plurality of battery cells 100 and the barrier 200a may be configured to be in close contact.

In this case, the length of the barrier 200a in the front-rear direction or the X-axis direction may be configured to be longer than the length of the body 110 of the battery cell 100 in the front-rear direction or the X-axis direction. For this reason, the barrier 200a may cover the entire side surface of the battery cell 100 and may be configured to cover at least a portion of the electrode lead 120. The front edge or rear edge of the barrier 200a may be in close contact with, contacted to, coupled to, fastened to, or inserted into the bus bar frame assembly 300.

According to this configuration of the present disclosure, the barrier 200a has a corrugated cardboard structure and thus may be configured to be deformable in the left-right direction or the Y-axis direction. As a result, when swelling occurs in the battery cell 100, the battery cell 100 may be stably supported by being compressed in the left-right direction or the Y-axis direction.

A battery pack according to the present disclosure may include two or more battery modules according to the present disclosure described above.

In addition, the battery pack according to the present disclosure may further include various other components in addition to the battery module, for example, components of a battery pack known at the time of filing of the present disclosure, such as a BMS, a bus bar, a pack case, a relay, a current sensor, or the like.

A vehicle according to the present disclosure may include two or more battery modules according to the present disclosure described above. The battery module according to the present disclosure may be applied to vehicles such as electric vehicles or hybrid vehicles. That is, the vehicle according to the present disclosure may include a battery module according to the present disclosure, or a battery pack according to the present disclosure. In addition, the vehicle according to the present disclosure may further include various other components included in the vehicle in addition to this battery module or battery pack. For example, the vehicle according to the present disclosure may further include a vehicle body, a motor, a control device such as an electronic control unit (ECU), or the like in addition to the battery module according to the present disclosure.

Meanwhile, the terms indicating directions as used herein such as upper, lower, left, right, front, and rear are used for convenience of description only, and it is obvious to those skilled in the art that the term may change depending on the position of the stated element or an observer.

While the present disclosure has been hereinabove described with regard to a limited number of embodiments and drawings, the present disclosure is not limited thereto and it is obvious to those skilled in the art that a variety of modifications and changes may be made thereto within the technical aspects of the present disclosure and the equivalent scope of the appended claims.

## Claims

1. A battery module comprising:
a frame providing an interior space;
a battery cell accommodated inside the frame and having a body and an electrode lead protruding toward the front of the body;
a bus bar frame assembly located in front of the battery cell and electrically connected to the electrode lead; and
a fire-resistant coating layer provided on at least a portion of the battery cell and having fire resistance.

2. The battery module according to claim 1,
wherein the battery cell further comprises a front terrace portion extending forward from the body and surrounding the electrode lead,
wherein the coating layer comprises a first coating layer covering the front terrace portion and the electrode lead.

3. The battery module according to claim 1,
wherein the fire-resistant coating layer comprises a second coating layer covering at least a portion of the rear surface of the bus bar frame assembly.

4. The battery module according to claim 3,
wherein the bus bar frame assembly has a slit,
wherein the electrode lead passes through the slit, and
the second coating layer extends to cover between the slit and the electrode lead.

5. The battery module according to claim 3,
wherein the coating layer further comprises a third coating layer extending from the second coating layer and covering the front surface of the bus bar frame assembly.

6. The battery module according to claim 1,
wherein the frame is open forward, and
the battery module further comprises an end plate located in front of the bus bar frame assembly and coupled to the front side of the frame.

7. The battery module according to claim 1,
wherein the battery cell further comprises an upper sealing portion extending upward from the body,
wherein the coating layer comprises a fourth coating layer covering at least a portion of the upper sealing portion.

8. The battery module according to claim 7,
wherein the battery cell further comprises an adhesive member for folding and fixing the upper sealing portion,
wherein the fourth coating layer extends to cover the adhesive member.

9. The battery module according to claim 1,
which further comprises a barrier that covers the side surface of the battery cell and is in close contact with the rear surface of the bus bar frame assembly,
wherein the coating layer further comprises a fifth coating layer covering the rear surface of the bus bar frame assembly and the side surface of the barrier adjacent to the rear surface.

10. The battery module according to claim 1,
wherein the bus bar frame assembly has a hole formed long in the vertical direction,
wherein the battery module further comprises a barrier that covers the side surface of the battery cell and penetrates the hole of the bus bar frame assembly, and
the coating layer further comprises a sixth coating layer covering the rear surface of the bus bar frame assembly and the side surface of the barrier adjacent to the rear surface.

11. A battery pack comprising a battery module according to any one of claims 1 to 10.

12. A vehicle comprising a battery module according to any one of claims 1 to 10.
